Europäisches Patentamt

European Patent Office

Office européen des brevets

(19)

(11) EP 0 858 208 A1

(12) EUROPEAN PATENT APPLICATION

(43) Date of publication:
12.08.1998 Bulletin 1998/33

(51) Int Cl.⁶: **H04N 1/21**, H04N 1/409

(21) Application number: 98200205.7

(22) Date of filing: 26.01.1998

| | |
|---|---|
| (84) Designated Contracting States:<br>**AT BE CH DE DK ES FI FR GB GR IE IT LI LU MC NL PT SE**<br>Designated Extension States:<br>**AL LT LV MK RO SI**<br><br>(30) Priority: **07.02.1997 US 796350**<br><br>(71) Applicant: **EASTMAN KODAK COMPANY**<br>**Rochester, New York 14650 (US)**<br><br>(72) Inventors:<br>• **Weldy, John Allan, Eastman Kodak Company**<br>**Rochester, New York 14650-2201 (US)** | • **Loveridge, Jennifer Clara,**<br>**Eastman Kodak Company**<br>**Rochester, New York 14650-2201 (US)**<br>• **Mcintyre, Dale F., Eastman Kodak Company**<br>**Rochester, New York 14650-2201 (US)**<br><br>(74) Representative: **Buff, Michel et al**<br>**KODAK INDUSTRIE**<br>**Département Brevets - CRT**<br>**Zone Industrielle - B.P. 21**<br>**71102 Chalon sur Saône Cédex (FR)** |

(54) **Method of producing digital images with improved performance characteristic**

(57)    A method of producing a digital image with improved performance characteristics includes capturing at least two electronic images of a scene and digitizing the at least two electronic images of a scene. The method further includes combining and processing the at least two digitized electronic images of the scene to produce a combined digital image of a scene with improved performance characteristics.

FIG. 3

## Description

The present invention relates to producing improved digital images which can, for example, be produced from cameras that capture more than one record of a scene.

Electronic image capture was spawned by the television industry over 50 years ago. Over the years, there have been advances from black and white (B&W) only image capture to full color capture. Coupled with more recent advances in video recording technology, the camcorder (and more recently, the digital camcorder) has become commonplace. In the 1980s, SONY Corporation introduced the electronic still camera for capturing still images and storing them in an analog manner on a magnetic disk. More recently, the large reduction in digital memory costs has led to many manufacturers introducing digital still cameras. These cameras typically feature a full-frame or interline charge coupled device (CCD) which is used to capture full color scene information.

Despite the rapid decrease in memory and CCD costs, image performance problems remain. One problem is the fact that when a single CCD is used, a captured color image has reduced spatial resolution compared to an otherwise equivalent B&W image. This is a consequence of the need for a color filter array (CFA) to enable the CCD to capture the color information from (slightly) different locations in the scene. Typically three color records will be captured simultaneously, each sparsely sampled and pixel interleaved with respect to the pixel structure as defined by the CCD. Subsequent analogue or digital image processing, typically by spatial interpolation to upsample and rephase the color records, is required to produce a full color record corresponding to every location in the scene. This color sparse-sampling and subsequent image processing can lead to color artifacts. Alternatively, the scene can be low-passed filtered prior to being sensed by the CCD through the CFA; however, this low-pass filtering further lowers the spatial resolution of the scene.

An alternative method for generating color utilizes separate sensors for each color channel (typically three sensors, one each for capturing red, green, and blue information). While this solves the spatial resolution problem, these systems typically use a single lens followed by a beam splitter and aligning optics. There are light losses (and therefore loss in the light sensitivity of the system) with beam splitters and the aligning optics oftentimes requires adjustment owing to temperature effects. In addition the beam splitter adds to the physical bulk of the camera.

Another problem encountered with CCD sensors is that the process used to manufacture these sensors and other silicon based devices such as digital memory yields, though small in number, defects. A defect that results in only a few single element picture elements (pixels) being lost from an image is typically acceptable; however, those defects resulting in line (a complete row or column of pixels) defects are not acceptable. Therefore the yield of acceptable CCDs from these manufacturing processes is oftentimes low. As the probability of defects is typically proportional to the light sensitive area of the CCD, making smaller CCDs can increase the yield. The smaller light sensitive area of smaller CCDs also has an advantage in that shorter focal length lenses (and therefore potentially thinner cameras) are required to produce the same field of view as when captured on a device with a larger light-sensitive area. Unfortunately, in order to maintain spatial resolution of smaller CCDs, smaller pixel sizes are required. Smaller pixel sizes can suffer from increased noise owing to the smaller photon detection area, and the lower number of electrons (generated from photons) that can be stored before reaching pixel saturation. To overcome this, larger area sensors can be made, but the above-mentioned problems with yield are exacerbated, resulting in high cost for larger area sensors.

It is an object of the present invention to overcome the above mentioned problems and provide a method of producing a digital image with improved performance characteristics, comprising the steps of:

a) capturing at least two electronic images of a scene;
b) digitizing the at least two electronic images of a scene; and
c) combining and processing the at least two digitized electronic images of the scene to produce a combined digital image of a scene with improved performance characteristics.

The present invention overcomes the above-mentioned problems associated with electronic capture of scenes. By capturing at least two electronic images of a scene, it is possible to overcome the spatial resolution and noise problems associated with small area electronic sensors. Further improved characteristics can be obtained by capturing the at least two electronic images through a corresponding number of separate lenses (each pointing at the scene), thus overcoming the above-mentioned problems that can result when beam splitter optics are employed.

FIG. 1a is a perspective view of a dual lens camera in accordance with the present invention;
FIG. 1b and FIG. 1c are perspective views of multilens cameras with four and eight lenses respectively;
FIG. 2 is a block diagram showing a central processing unit that can take the stored digital data from the dual lens camera and process the images in accordance with the present invention; and
FIG. 3 is a flow chart showing in block diagram form the steps needed for the combining and image processing to produce the digital image with improved performance characteristics.

By the use of the term dual lens camera, is meant that there are at least two separate images formed with their own unique, non-optically linked lens systems. For clarity, much of the following description details examples wherein only two images are captured and combined; however it will be evident to those skilled in the art that greater than two images could be captured and combined, as taught below, to provide digital images with improved performance characteristics.

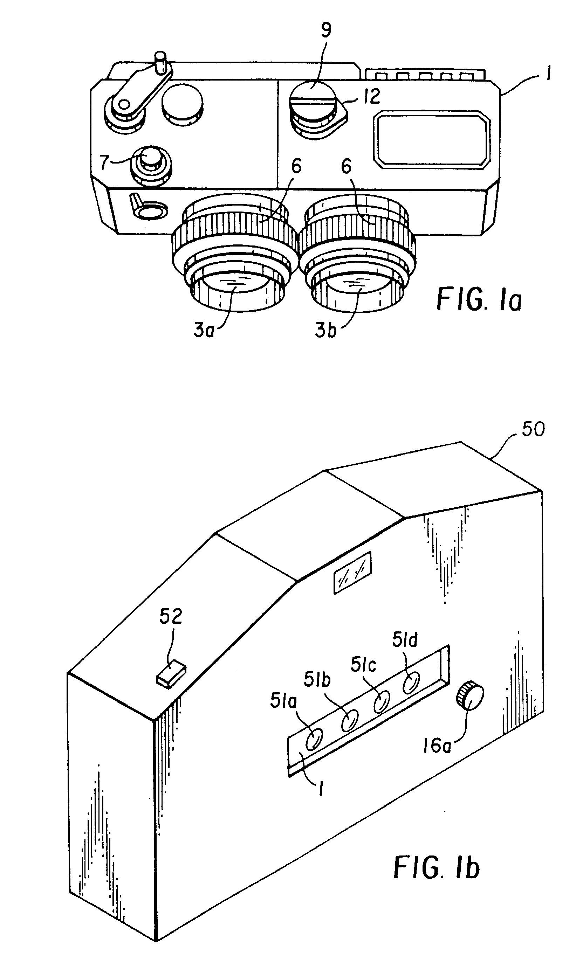

Turning to FIG. 1a, there is shown a dual lens electronic camera having a main camera body 1; imaging lenses 3a and 3b; focusing mechanisms 6; a shutter switch including a self-return push-button switch 7; and a shutter speed dial 9. These components are the same as in a standard electronic camera.

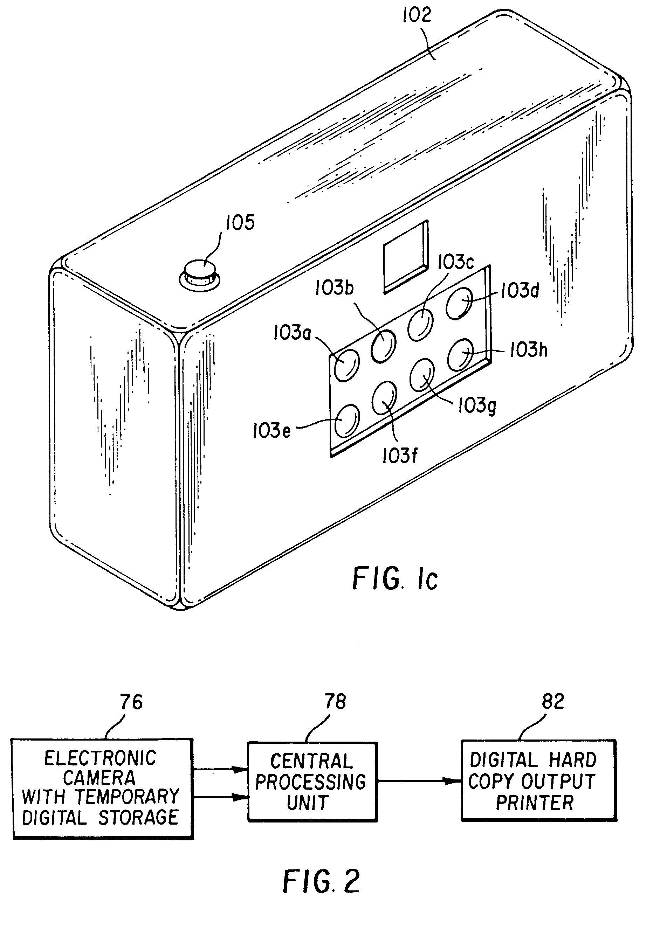

Turning now to FIG. 2, a block diagram is shown having a means to extract the digitized electronic images from the temporary digital storage within camera 76 and transfer these images to the central processing unit 78. Stored and transferred with the digitized scene information is identification information that allows the central processing unit 78 to collate all of the images for the same scene when performing the subsequent digital image processing. After the central processing unit has processed the images in accordance with the present invention, it produces output signals to a digital hard copy output printer 82, or alternatively displays the processed images on a cathode ray tube (CRT) or utilizes these processed images in other subsequent steps (not shown), such as image transmission, alternate digital storage, or the like. Digital hard copy output printers, for example ink jet printers and thermal printers, are well known in the art.

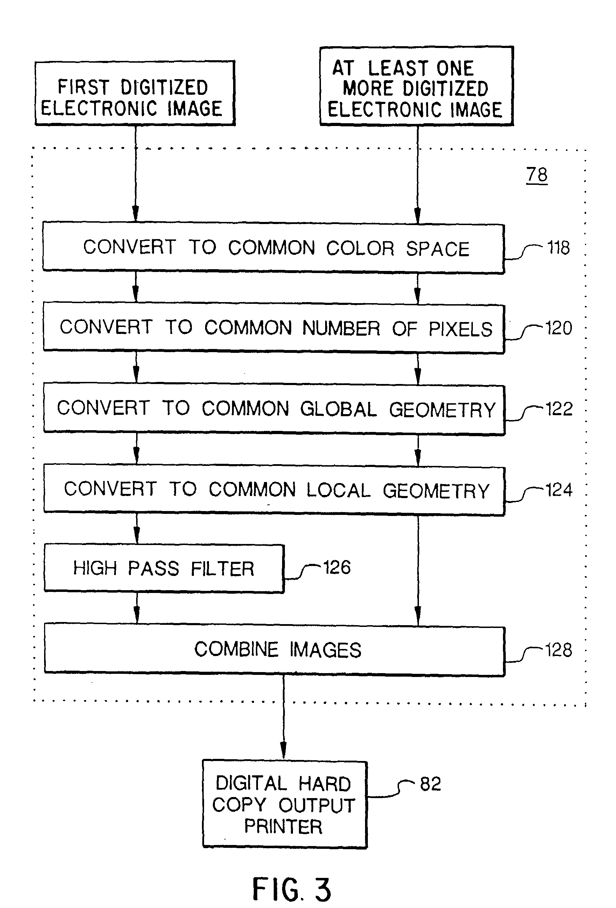

Turning now to FIG. 3 which is a block diagram showing the algorithm for producing a combined digital image having improved characteristics; the two digitized electronic images are applied to the central processing unit 78. This block diagram and the corresponding description of the algorithm relate to two digitized electronic images, however it will be understood that the method can be extended to apply to more than two digitized electronic images. Although this algorithm is embodied in the central processing unit 78, it will be well understood that the algorithm can be stored on a computer program product such as, for example, magnetic storage media, such as magnetic disks (floppy disk) or magnetic tapes; optical storage media such as optical disks, optical tape, or machine readable barcode; solid state devices such as random access memory (RAM) or read only memory (ROM).

The first step is to convert the at least two digitized electronic images to a common color space. Although the images are digital representations of the same scene, the at least two electronic sensors need not have the same spectral sensitivities, and in this case, the color information will be apportioned differently among the color channels in the at least two electronic sensors. The images should be transformed into a common color space with a common tone-scale, by means of color matrices and look-up tables (see, for example, W.K. Pratt, Digital Image Processing, pp 50-93, Wiley Interscience 1978), or by means of 3-D LUTs, techniques which are well known to those skilled in the art.

In block 120 the number of pixels in each of color converted images must be substantially matched in number of pixels. In other words, there should be a common number of pixels. It will be understood that the at least two electronic sensors need not have the same number of pixels, and in this case, the image with the lower number of pixels is upsampled by the method of, for example, bi-cubic interpolation to match the number of pixels of the other image. Other types of interpolation techniques can also be used to upsample digitized images, such as spatial function fitting, convolution, and Fourier domain filtering. These are well known in the art, and described, for example, in W.K. Pratt, pp 113-116.

In block 122, corrections are now made to the digitized electronic images to correct for any difference in their global geometry, that is any geometrical transformation which, when applied to every pixel in one image, enables its geometry to be substantially mapped onto the geometry of the other. Examples of such transformations are translation, rotation, scaling, aspect ratio, and the geometrical differences between the lens systems that are used for the at least two electronic sensors. It will be understood that this correction need be applied to all but one of the digitized electronic images to enable them to be mapped onto the geometry of one of the digitized electronic images that is not to be corrected for geometry (referred to hereafter as the default image). Since there may be some slight loss in image quality, sharpness in particular, associated with the application of this correction, the correction would normally be applied to *the* digitized electronic images originally had fewer pixels at block 120.

The correction will typically involve three steps, which are described in terms of correcting the geometry of one of the digitized electronic images to the geometry of the default digitized electronic image. First is the generation of a set of displacement vectors, typically with sub-pixel accuracy, which characterize a local $x,y$ displacement between the two images at certain locations in the image-pair. A variety of techniques may be suitable, including block matching, and the method of differentials, both well known in the art (Image Processing, edited by D. Pearson, Chapter 3, "Motion and Motion Estimation," G. Thomas, pp 40-57, McGraw-Hill, 1991), but the preferred technique for this application is phase correlation. For a more complete disclosure of phase correlation techniques, see Pearson ibid. Phase correlation provides a method to generate displacement vectors which is robust in the presence of noise and brightness changes in the record of the scene. The second step is the interpretation of that set of displacement vectors as a generalized geometrical transformation. Three commonly occurring transformations are described here, translation, magnification (zoom) and rotation in the plane of the image, but it will be understood that a similar process can be used to interpret all geometrical transformations of rigid bodies. In the case of translation, the transformation is defined, simply, as that $x,y$ displacement which occurs most frequently in the set of displacement vectors. Otherwise, if two independent translation vectors are available from the vector set which map positions $(x_1,y_1)$ and $(x_2,y_2)$ in one image onto $(x_1,y_1')$ and $(x2',y2')$ respectively in the second image, then the following transformation may be defined:

Magnification, by a factor m $(m \neq 1)$, about an origin at $(a, b)$, is defined as

$$\begin{bmatrix} m & 0 \\ 0 & m \end{bmatrix} \begin{bmatrix} x_i - a \\ y_i - b \end{bmatrix} + \begin{bmatrix} a \\ b \end{bmatrix} = \begin{bmatrix} x'_i \\ y'_i \end{bmatrix}$$

Hence, substituting the pair of translation vectors and rearranging yields

$$m = \frac{x_2' - x_1'}{x_2 - x_1} \qquad a = \frac{x_2' - mx_2}{(1 - m)} \qquad b = \frac{y_2' - my_2}{(1 - m)}$$

The generalized equation for a rotation in the $x,y$ plane about a center at $(a, b)$ through an angle $\phi$ is

$$\begin{bmatrix} \cos\phi & -\sin\phi \\ \sin\phi & \sin\phi \end{bmatrix} \begin{bmatrix} x - a \\ y - b \end{bmatrix} + \begin{bmatrix} a \\ b \end{bmatrix} = \begin{bmatrix} x' \\ y' \end{bmatrix}$$

which can be solved in a similar fashion by substituting in the translation vectors to yield $a, b, \phi$, and so on for the other transformations. The third step is the geometrical transformation of one of the pair of images according to the parameters calculated and the transformation equations given in step 2. Typically, this is achieved using phase-shifting spatial interpolation, similar to the interpolation techniques referenced above.

In the simplest implementation of this algorithm, the images are now combined by, for example, a numerical or geometric average on a pixel-wise basis, as shown in block 128.

However, oftentimes local areas in the above mentioned simple combination suffer from poor quality resulting from, for example, differences in the local geometry among the images. A simple solution to this problem is to detect these local areas, and to change the way in which the images are combined in these local areas. Specifically, where the difference between the default image and one of the digitized electronic images measured at each pixel location, is within a specified tolerance (depending on the inherent noise characteristics of the electronic recording medium), the pixel values of the two images are averaged. Where the difference between the same location pixel-values for the digitized electronic images are not within this tolerance, the pixel value from one of the images is chosen to provide a value at that position for the resultant image. The choice of which image to use is made based on measures of local noise or local sharpness, dependent on the application, but one image is used consistently either for any pair of images, or for each local area within the pair of images. This procedure is repeated for each of the at least one digitized electronic images that are not the default image, resulting in a varying number of images being averaged at any pixel location.

An approach to provide improved image quality in local areas where the above mentioned tolerance is exceeded is to convert to a common local geometry, as shown in block 124. Again, it will be understood that these local corrections need be applied to all but one of the digitized electronic images images to enable it to be mapped onto the geometry of the default digitized electronic image. The measurement of these differences in local geometry is achieved by techniques similar to those used for the measurement of global displacements, and involves the assignment of a displacement vector, obtained, for example by the phase correlation technique, to each pixel in the image to be corrected. The resultant array of assigned vectors, which maps the values of each pixel in one image onto the corresponding pixel positions in the default image, is generally referred to as a vector field. The method is well known and described, for example, in Image Processing, edited by D. Pearson, Chapter 3, "Motion and Motion Estimation," G. Thomas, pp 53-54, McGraw-Hill, 1991. The pair of images may now be combined by first correcting one image by spatial interpolation according to the vector field, then combining the two images by averaging, pixel-by-pixel, the same location pixel-values. Alternatively, it may be more efficient to perform these two steps simultaneously by performing an average of the two images on a pixel-by-pixel basis, but where the corresponding pixel positions are defined according to the vector field. It will be understood to those skilled in the art that although the above the description relates to the use of the vector field to correct for differences in local geometry between two images which have already been converted to a common global geometry, a vector field can be generated which can be used to measure and correct for differences in both the global and local geometries simultaneously.

In the case where the two digitized images are from electronic sensors of different spatial resolutions, that is are represented by a different number of pixels, improved sharpness (spatial detail) and reduced noise can be achieved by applying a high-pass filter at block 126, to that image which contains the greatest amount of high spatial frequency information. The high-pass filter, which may be designed using well known techniques (as described, for example, in Chapter 3 of "Theory and Application of Digital Signal Processing", Rabiner & Gold, Prentice-Hall 1975), should have a spatial-frequency response which corresponds to the difference in the effective spatial frequency responses of the two sensors of different spatial resolutions. The digital images are combined in block 128 by adding the high-pass filtered digital image to the digital image which contains less information at high spatial frequencies, according to the considerations described in the previous paragraph.

It will be further appreciated that the particular two lens/two sensor embodiment described above can be varied and modified to greater than two lens/two sensor systems wherein all the greater than two lens/sensor systems are used to simultaneously capture light information from the same scene. FIG. 1b shows a multi-lens camera with main body 50, four imaging lenses 51a, 51b, 51c and 51d, shutter switch 52 and focusing mechanism 16a. Similarly, FIG. 1c shows a multi-lens camera with main body 102, eight imaging lenses 103a-h, and shutter switch 105. As more than one representation of the scene is captured, it is possible to select scene exposure conditions in a way that provides for improving various characteristics.

One example arises if the at least two electronic images are not at the same focus position. Most scenes typically have scene objects at different distances from the camera, and therefore it is often the case, particularly with large apertures (small lens f-numbers), that only part of the scene is in focus. By utilizing image combination as described above, where the image with the best signal to noise is selected on a local basis, a combined image is produced in which more scene objects are sharper than in any of the input images. In this case, the "sharpest" of the images is defined as whichever image has the highest local signal to noise ratio, as determined, for example, by comparing the magnitude of the high-pass filtered image to the a priori noise level for the corresponding image capture means as measured over the same band of spatial frequencies, for each of the images. Alternatively, it is possible to divide each of the digitized images from electronic sensors, after conversion to a common global and local geometry, into high and low frequency components by means of high-pass and low-pass filters. The low frequency component components of the images are averaged and the high frequency component of the image with the best signal to noise (as defined above).

A second example occurs when the electronic images do not have the same depth of field. The depth of field of an image capture system is a function of both lens focal length and aperture (f-number). It may be that the light sensitive areas of the two or more image sensors are different. In this case the smallest image sensor utilizes a shorter focal length lens (for the same angle of view of the scene) and, therefore, has the greatest the depth of field for a given f-number. An improved performance can be achieved which is similar to that obtained when the images are captured at different focus positions; this time the difference in local sharpness (improved signal-to-noise) having resulted from capture with different depth of field (or combination of depth of field and focus position). This variation can be particularly useful in situations where large size lens apertures are used, for example, in cases of low scene illumination or when very short exposure times are required, e.g., for capturing fast moving action without image blur.

Further improvement in image performance can be achieved by utilizing alternate types of image combinations. For example, as described earlier, image sensors (CCD) and other electronic capture devices cannot sense and fully separate and form three independent color channels at a single capture site (CCD pixel). Given this limitation, CCDs and other electronic capture media typically have to apportion the total light sensing elements into at least three different color sensitive types (e.g. red, green and blue; or cyan, yellow, green and white) in order to capture a color image. Image processing algorithms are utilized to reconstruct a full color image but, fundamentally there is a loss in spatial resolution in order to obtain a color image. Furthermore, when color filters are attached to the surface of the image sensor, they, by definition, limit the number of photons captured by the sensor to those photons of wavelength that are transmitted by the color filter. In consequence, it is possible to utilize single capture sites (CCD pixels) that are smaller in physical dimension (and therefore generate a higher resolution digitized electronic image from the same area of silicon) if no color filters are attached to the surface of the capture sites, since more photons per unit area will be captured than when a color filter is present. Hence, in situations where the camera is operating at the limits of light sensitivity, there is an advantage in utilizing a high-resolution (small capture site) monochrome (no color filter) image sensor, in conjunction with either a single lower-resolution sensor with a color filter array attached and larger pixels, or a set of lower resolution (larger pixels) color arrays, each sensitive to bands of wavelengths corresponding to a "single" color. Techniques of this type have been employed in the past in relation to high-resolution CCD scanners of motion-picture film for the television industry (see, for example, the U.S. Patent assigned to R.A. Sharman and R.T.

Lees related to IR 246253X, A quad-linear sensor for high definition film scanning). However, because these scanners capture images from film, they are not subject to factors such as depth of field or differences in local geometry. This invention enables the advantages of a combination of high-resolution monochrome sensor and lower-resolution color sensors to be used in the context of a digital camera by employing the techniques described earlier to convert the images from both sensor-types to a common global and local geometry. More specifically, a typical implementation of the method comprises: first the generation of a common number of pixels by up-interpolating the color image to generate the same number of pixels as the monochrome image; secondly the conversion of both images to a common global and local geometry by the methods described earlier; third, the application of a high-pass filter to the monochrome image, where the high-pass filter is complementary to the difference in the effective filtration between the monochrome and color channels (sensor and subsequent signal processing for interpolation); finally the addition if the high spatial-frequency monochrome signal to the up-converted color channels with common global and local geometry to produce a full color image of improved characteristic.

A further alternate type of image combination may be achieved, for example, with the use of three or more non-optically linked lens systems and three or more electronic sensors, wherein each of the multiple lenses is spectrally filtered to one of at least three color types (e.g. red, green and blue; white, yellow, and green; or cyan, yellow, green and white). By utilizing the above described global and local combination techniques to combine the at least three images, a full color image can be reproduced. This provides a further method to overcome the problem associated with the use of a single CCD to capture a full color image, described in the paragraph above, while also overcoming the problems of alignment of the optics as described in the background. In addition, by utilizing greater than three spectrally filtered and captured images, it is possible to provide further improved color reproduction by being able to better estimate the original spectral power distribution of scene objects.

## Parts List

| | |
|---|---|
| 1 | main camera body |
| 3a | imaging lens |
| 3b | imaging lens |
| 6 | focusing mechanisms |
| 7 | shutter switch |
| 9 | shutter speed dial |
| 16a | focusing mechanism |
| 50 | main body |
| 51a | imaging lens |
| 51b | imaging lens |
| 51c | imaging lens |
| 51d | imaging lens |
| 52 | shutter switch |
| 76 | camera |
| 78 | central processing unit |
| 82 | digital hard copy output printer |
| 102 | main body |
| 103a | imaging lens |
| 103b | imaging lens |
| 103c | imaging lens |
| 103d | imaging lens |
| 103e | imaging lens |
| 103f | imaging lens |
| 103g | imaging lens |
| 103h | imaging lens |
| 105 | shutter switch |
| 120 | block |
| 122 | block |
| 124 | block |
| 126 | block |
| 128 | block |

**Claims**

1. A method of producing a digital image with improved performance characteristics, comprising the steps of:

   a) capturing at least two electronic images of a scene;
   b) digitizing the at least two electronic images of a scene; and
   c) combining and processing the at least two digitized electronic images of the scene to produce a combined digital image of a scene with improved performance characteristics.

2. The method of claim 5 wherein the combining and processing step includes high-pass filtering of the digitized first and the at least one more electronic images containing more information at high spatial frequencies, and adding these high-pass filtered images to the at least one image containing less information at high spatial frequencies.

3. The method of claim 5 wherein the combining and processing step includes low-pass and high-pass filtering the digitized first and at least one more electronic images, and combining the images by first averaging the low-pass filtered images and then adding the high-pass filtered images containing the most information.

4. A method of producing a digital image with improved performance characteristics, comprising the steps of:

   a) producing a first electronic image of a scene by a camera;
   b) producing at least one more electronic image of the same scene by the same camera but from a different position;
   c) digitizing the first and the at least one more electronic images of a scene; and
   d) combining and processing the digitized first electronic image and the at least one more digitized electronic image to produce another digital image with improved performance characteristics.

5. A method of producing a digital image with improved performance characteristics, comprising the steps of:

   a) producing a first electronic image of a scene by a camera;
   b) producing at least one more electronic image of the same scene by the same camera but from a different position;
   c) digitizing the first and the at least one more electronic images of a scene;
   d) storing the digitized electronic images of the scene on digital storage medial and
   e) combining and processing the digitized first electronic image and the at least one more digitized electronic image stored on digital storage media to produce another digital image with improved performance characteristics.

6. A computer program product for producing a digital image with improved performance characteristics from the at least two digitized electronic images of the same scene and having a computer program stored thereon for performing the steps of:

   (i) converting to a common global geometry; and
   (ii) combining and processing the converted digitized electronic images to produce another digital image with improved performance characteristics.

7. A computer program product for producing a digital image with improved performance characteristics from the at least two digitized electronic images of the same scene and having a computer program stored thereon for performing the steps of:

   (i) converting the images to a common color space;
   (ii) converting the images to a common number of pixels;
   (iii) converting to a common global geometry; and
   (iv) combining and processing the converted digitized electronic images to produce another digital image with improved performance characteristics.

8. The computer program product of claim 19 wherein the conversion step (iii) includes globally aligning the digitized first and at least one more electronic images, then, when there is any misalignment in any local area, measuring and correcting as appropriate for each of these locally misaligned areas of the digitized first and at least one more electronic images and combining the appropriately corrected images to produce a combined digital image with improved performance characteristics.

FIG. Ia

FIG. Ib

FIG. Ic

FIG. 2

FIG. 3

# EUROPEAN SEARCH REPORT

**European Patent Office**

**Application Number**

EP 98 20 0205

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PATENT ABSTRACTS OF JAPAN vol. 013, no. 459 (E-832), 17 October 1989 & JP 01 177288 A (KONICA CORP), 13 July 1989, * abstract * | 1,4-7 | H04N1/21 H04N1/409 |
| Y A | US 5 555 324 A (WAXMAN ALLEN M ET AL) * abstract * | 1,4-7 8 | |
| A | EP 0 580 146 A (EASTMAN KODAK CO) * the whole document * | 1-8 | |
| A | US 5 010 504 A (LEE HSIEN-CHE ET AL) * the whole document * | 1-8 | |
| A | EP 0 726 672 A (FUJI PHOTO FILM CO LTD) * abstract * | 1-8 | |
| A | EP 0 675 635 A (CANON KK) * abstract * | 7 | |

TECHNICAL FIELDS SEARCHED (Int.Cl.6)

H04N

The present search report has been drawn up for all claims

| Place of search | Date of completion of the search | Examiner |
|---|---|---|
| BERLIN | 6 March 1998 | Greve, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)